Europäisches Patentamt

European Patent Office

Office européen des brevets

(19)

(11) Publication number : **0 511 795 A1**

## (12) EUROPEAN PATENT APPLICATION

(21) Application number : 92303730.3

(22) Date of filing : 24.04.92

(51) Int. Cl.⁵ : **B60R 16/02,** G06F 13/10, G06F 9/44

(30) Priority : 26.04.91 JP 97672/91

(43) Date of publication of application :
04.11.92 Bulletin 92/45

(84) Designated Contracting States :
DE FR GB

(71) Applicant : PIONEER ELECTRONIC
CORPORATION
No. 4-1, Meguro 1-chome
Meguro-ku Tokyo-to (JP)

(72) Inventor : Go, Yasunao, c/o Pioneer Electronic
Corp.
Kawagoe Works, No 25-1 Aza-Nishicho,
Oaza-Yamada
Kawagoe-shi, Saitama-ken (JP)

Inventor : Kimura, Toshiyuki, c/o Pioneer Elec.
Corp.
Kawagoe Works, No 25-1 Aza-Nishicho,
Oaza-Yamada
Kawagoe-shi, Saitama-ken (JP)
Inventor : Ikata, Yoshikatsu, c/o Pioneer Elec.
Corp.
Kawagoe Works, No 25-1 Aza-Nishicho,
Oaza-Yamada
Kawagoe-shi, Saitama-ken (JP)
Inventor : Shimotsuma, Hiroshi, c/o Pioneer
Elec. Corp.
Kawagoe Works, No 25-1 Aza-Nishicho,
Oaza-Yamada
Kawagoe-shi, Saitama-ken (JP)

(74) Representative : Brunner, Michael John
GILL JENNINGS & EVERY 53-64 Chancery
Lane
London WC2A 1HN (GB)

(54) system for and method of data communication on automobile.

(57) A data communication system for use on a motor vehicle Includes a master unit connected to a communication bus and a plurality of slave units connected to the communication bus and operable under the control of the master unit. The master unit has a master controller which transmits, through the communication bus to the slave units, operation start data which includes slave address code data which identifies at least two of the slave units. Each of the slave units has a memory and a slave controller. The memory stores operation data, indicative of an operation sequence, that has been transmitted in advance from the master unit. The slave controller starts to operate the slave unit based on the stored operation data when the slave address code data transmitted from the master unit corresponds to a slave address code which is allotted to the slave unit. Those slave units which are selected by the master unit simultaneously start operating based on the stored operation data in response to the operation start data from the master unit. Therefore, some or all of the slave units connected to the communication bus can be operated simultaneously irrespective of different times at which the operation data have been transmitted from the master unit through the communication bus to the respective slave units.

FIG. 1

EP 0 511 795 A1

## BACKGROUND OF THE INVENTION

Field of the Invention:

The present invention relates to a data communication system and a data communication method on an automobile, and more particularly to a data communication system and a data communication method suitable for use on an automobile, the data communication system having a plurality of components to be operated simultaneously. Description of the Prior Art:

In recent years, automobile audio systems have been changing from systems which give the user only audio information such as music to systems which allow the user to enjoy both audio and visual information. Systems with both audio and visual capabilities are known as audiovisual systems.

Automobile audiovisual systems on automobiles are composed of many different audio and visual components. The audio components include a cassette tape deck, a radio tuner, a CD (compact disc) player, etc., while the visual components include a TV (television) tuner, a navigation system, etc. Audio signals produced by some of these components are amplified by an amplifier and reproduced from loudspeakers in the automobile. Video signals produced by other components are displayed on a display unit in the automobile. Today, the audiovisual system components are controlled according to digital technology, i.e., by respective controllers in the form of microcomputers.

The components of an audiovisual system are required to be controlled systematically for systematic operation of the components. To meet this requirement, the controllers of the respective components are connected by a communication bus network, so that control data for the components will be transmitted through the communication bus. And either one of these components is selected as "master" unit for controlling the communication network, while the other components serve as "slave" units.

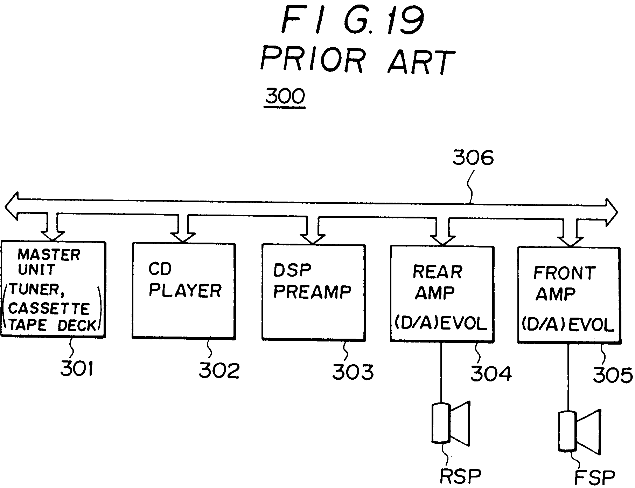

One conventional communication bus network is shown in FIG. 19 of the accompanying drawings.

As shown in FIG. 19, the conventional communication bus network, generally indicated by the reference numeral 300, comprises a tuner/deck 301 serving as a master unit for the entire network 300, a CD (compact disc) player 302 for playing back CDs, a DSP (digital signal processor) preamplifier 303, a rear amplifier 304 for driving rear loudspeakers RSP, and a front amplifier 305 for driving front loudspeakers FSP. These components of the network 300 are connected to each other by a communication bus 306.

If the rear and front amplifiers 304, 305 have individual volume control functions, then the DSP preamplifier 303 operates as a master unit and the rear and front amplifiers 304, 305 as slave units, respectively. The loudness, i.e., the power level, of the rear and front amplifiers 304, 305 is controlled on the basis of operation data that is transmitted from the DSP preamplifier 303 over the communication bus 306 to the rear and front amplifiers 304, 305.

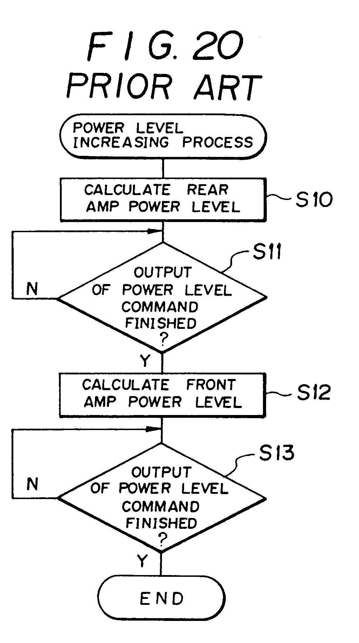

FIG. 20 of the accompanying drawings shows a control sequence of the DSP preamplifier 303 for increasing the power level of the rear and front amplifiers 304, 305.

When a power level increasing key is pressed to increase the power level of the rear and front amplifiers 304, 305 by one step or notch, the DSP preamplifier 303 calculates a power level for the rear amplifier 304 in a step S10, and outputs operation data representing the calculated power level to the communication bus 306. The DSP preamplifier 303 waits until reception completion data, representing the completion of reception of the control data, is transmitted from the rear amplifier 304 over the communication bus 306 in a step S11. When the rear amplifier 304 has received the operation data, it increases the power level by one step based on the received operation data, and outputs reception completion data to the communication bus 306. Having received the reception completion data, the DSP preamplifier 303 determines that the transmission of the operation data to the rear amplifier 304 is finished. Then, the DSP preamplifier 303 calculates a power level for the front amplifier 305 in a step S12, and outputs operation data representing the calculated power level to the communication bus 306. The DSP preamplifier 303 waits until reception completion data, representing the completion of reception of the control data, is transmitted from the front amplifier 305 over the communication bus 306 in a step S13. When the front amplifier 305 has received the operation data, it increases the power level by one step based on the received operation data, and outputs reception completion data to the communication bus 306. Having received the reception completion data, the DSP preamplifier 303 determines that the transmission of the operation data to the front amplifier 305 is finished, and enters a standby mode.

One problem with the conventional network is that communication data transmitted and received over the communication bus is transferred serially. Even if the slave units are to be operated simultaneously, since the communication data is transmitted serially from the master unit to the slave units, the slave units are actually switched into operation at different times. Specifically, when the power levels of the rear and front amplifiers 304, 305 are to be increased, as described above, they are actually increased at different times, tending to make the listener feel strange and awkward.

## SUMMARY OF THE INVENTION

It is an object of the present invention to provide a data communication system and a data communication method for use on an automobile, which is capable of simultaneously operating a plurality of slave units connected to a communication bus.

According to the present invention, there is provided a data communication system for use on a motor vehicle, comprising a communication bus, at least one master unit connected to the communication bus, and a plurality of slave units connected to the communication bus, the master unit having an operation start indicating unit for transmitting, through the communication bus to the slave units, operation start data which includes slave address code data which identifies at least two of the slave units, each of the slave units having a memory for storing operation data, indicative of an operation sequence, that has been transmitted in advance from the master unit, and an operation starting unit for starting to operate the slave unit based on the stored operation data when the slave address code data transmitted from the master unit corresponds to a slave address code which is allotted to the slave unit.

According to the present invention, there is also provided a data communication system for use on a motor vehicle, comprising a communication bus, at least one master unit connected to the communication bus, and a plurality of slave units connected to the communication bus, the master unit having an operation start indicating unit for transmitting, through the communication bus to the slave units, operation start data which includes slave address code data which identifies either one of the slave units, each of the slave units having a memory for storing operation data that has been transmitted in advance from the master unit, and an operation starting unit for starting to operate the slave unit based on the stored operation data when the slave address code data transmitted from the master unit corresponds to a slave address code which is allotted to the slave unit.

According to the present invention, there is further provided a method of controlling operation of a data communication system for use on a motor vehicle, the data communication system comprising a communication bus, at least one master unit connected to the communication bus, and a plurality of slave units connected to the communication bus, the method comprising the steps of transmitting, from the master unit through the communication bus to the slave units, operation start data which includes slave address code data which identifies at least two of the slave units, storing, in each of the salve units, operation data, indicative of an operation sequence, that has been transmitted in advance from the master unit, and starting to operate the slave unit based on the stored operation data when the slave address code data transmitted from the master unit corresponds to a slave address code which is allotted to the slave unit.

Those slave units which are selected by the master unit simultaneously start operating based on the stored operation data in response to the operation start data from the master unit. Therefore, some or all of the slave units connected to the communication bus can be operated simultaneously irrespective of different times at which the operation data have been transmitted from the master unit through the communication bus to the respective slave units.

The above and other objects, features and advantages of the present invention will become more apparent from the following description when taken in conjunction with the accompanying drawings in which preferred embodiments of the present invention are shown by way of illustrative example.

BRIEF DESCRIPTION OF THE DRAWINGS

FIG. 1 is a block diagram of a data communication system according to an embodiment of the present invention;
FIG. 2 is a block diagram of a power supply circuit for an audiovisual system as the data communication system;
FIG. 3 is a block diagram of the audiovisual system;
FIG. 4 is a block diagram of a control network of the audiovisual system;
FIG. 5 is a block diagram of a specific arrangement in which a master unit and a slave unit are connected to each other;
FIG. 6 is a block diagram of another specific arrangement in which a master unit and a slave unit are connected to each other;
FIG. 7 is a diagram of a transfer format of communication data;
FIG. 8 is a diagram of basic data formats;
FIG. 9 is a diagram of major classification data;
FIG. 10 is a diagram of subclassification data;
FIG. 11 is a diagram showing physical addresses;
FIG. 12 is a diagram showing physical addresses;
FIG. 13 is a diagram showing logical addresses;
FIG. 14 is a diagram illustrative of an example in which physical and logical addresses are assigned;
FIG. 15 is a flowchart of a control sequence for increasing the power level of a DSP preamplifier of the data communication system;
FIG. 16 is a diagram showing a communication sequence by way of example;
FIG. 17 is a block diagram of a data communication system according to another embodiment of the present invention;
FIG. 18 is a block diagram of a data communication system according to still another embodiment of the present invention;
FIG. 19 is a block diagram of a conventional data communication system; and
FIG. 20 is a flowchart of a control sequence for increasing the power level of a DSP preamplifier of the conventional data communication system.

## DETAILED DESCRIPTION OF THE PREFERRED EMBODIMENTS

### GENERAL ARRANGEMENT OF DATA COMMUNICATION SYSTEM

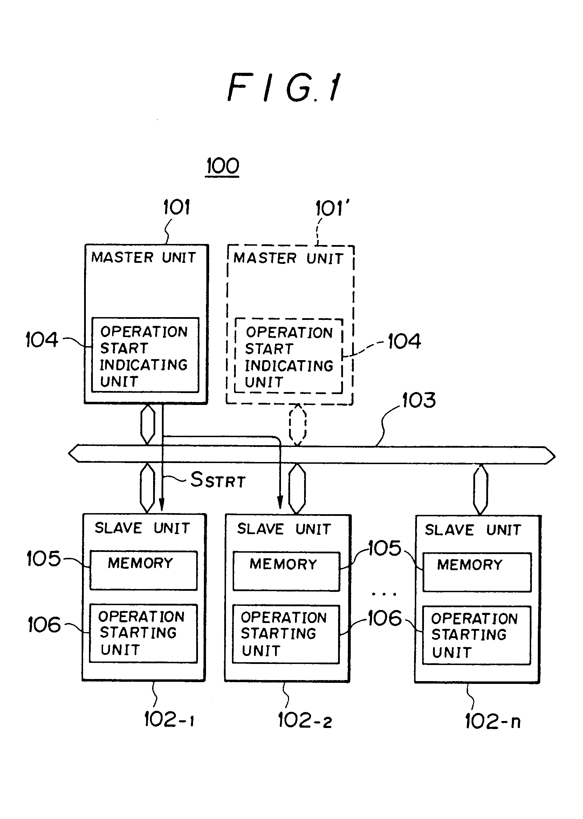

FIG. 1 schematically shows in block form a data communication system for use on an automobile according to an embodiment of the present invention.

The data communication system, generally designated by the reference numeral 100, comprises at least one master unit 101 (101') connected to a communication bus 103 and a plurality of slave units $102_{-1}$, $102_{-2}$, ..., $102_{-n}$ connected to the communication bus 103. The master unit 101 has an operation start indicating unit 104 for selecting at least two slave units $102_{-1}$, $102_{-2}$ of the slave units $102_{-1}$ - $102_{-n}$, and outputting, to the communication bus 103, operation start data $S_{STRT}$ that can simultaneously be received by the selected slave units $102_{-1}$, $102_{-2}$. Each of the slave units $102_{-1}$, $102_{-2}$, ..., $102_{-n}$ has a memory 105 for storing operation data that has been transmitted in advance from the master unit 101, and an operation starting unit 106 for starting to operate the slave unit based on the stored operation data in response to the reception thereby of the operation start data $S_{STRT}$, from the master unit 101.

The memory 104 of the respective slave units $102_{-1}$, $102_{-2}$, ..., $102_{-n}$ store operation data that has been transmitted beforehand from the master unit 101. The operation start indicating unit 104 outputs, to the communication bus 103, operation start data $S_{STRT}$, that can simultaneously be received by selected slave units $102_{-1}$, $102_{-2}$. The operation starting unit 106 of the selected slave units $102_{-1}$, $102_{-2}$ start operating the selected slave units $102_{-1}$, $102_{-1}$ based on the stored operation data in response to the reception thereby of operation start data $S_{STRT}$, from the master unit 101.

Consequently, the master unit 101 is capable of making the selected slave units $102_{-1}$, $102_{-2}$ start to operate simultaneously irrespective of the time when the master unit 101 has transmitted the operation data $S_{STRT}$.

### POWER SUPPLY OF AUDIOVISUAL SYSTEM

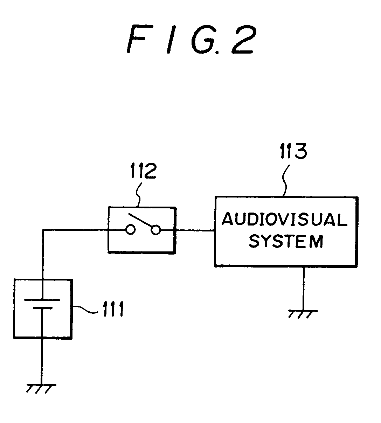

The principles of the present invention are particularly useful when embodied in an audiovisual (AV) system on an automobile as the data communication system. As shown in FIG. 2, the audiovisual system, denoted at 113, is supplied with electric energy from a battery 111 through an ACC switch 112. The ACC switch 112 is ganged with an engine start keyswitch of the automobile. When the engine key inserted in the engine start keyswitch is turned to the position of the ACC switch, the accessories on the automobile are energized by the battery 111. At the same time, the audiovisual system 113 is also energized by the battery 111.

### ARRANGEMENT OF AUDIOVISUAL SYSTEM

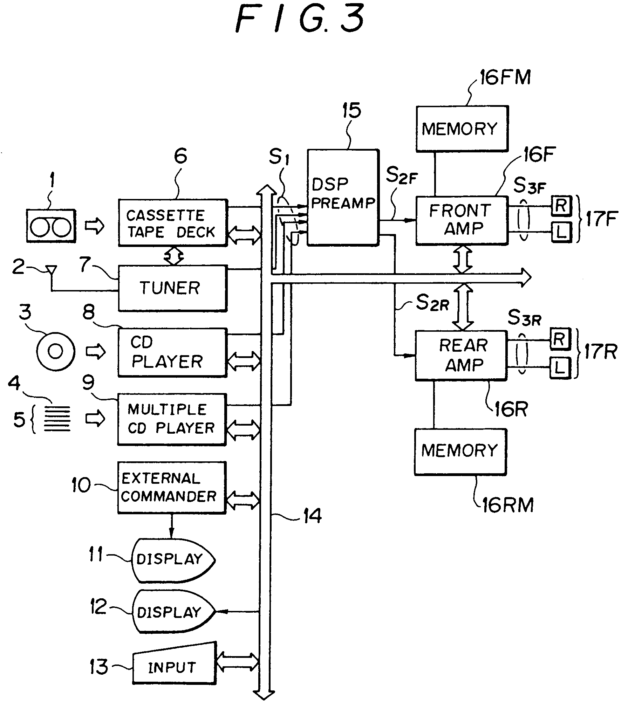

FIG. 3 shows a detailed systematic arrangement of the audiovisual system. The audiovisual system has audio reproducing components and visual reproducing components. The audio reproducing components include a cassette tape deck 6 for reproducing recorded audio signals from a cassette tape 1, a tuner 7 such as an AM/FM tuner for reproducing radio signals which are received by an antenna 2, a CD player 8 for reproducing recorded signals from a CD 3, and a multiple CD player 9 having an automatic CD changer 5 for reproducing recorded signals from multiple CDs 4. The visual reproducing components include a TV tuner contained in the tuner 7, for reproducing TV signals received by the antenna 2, and a display unit 12 for displaying images based on the TV signals and also displaying still images based on signals from the CD player 8 if a CD-ROM is played back by the CD player 8. Typically, a CD-ROM is employed by a navigation system. The audiovisual system has an external commander 10 which is in the form of a keyboard for entering various operation commands. A display unit 11 is connected to the external commander 10. The audiovisual system also has an input unit 13, which may be incorporated in the external commander 10.

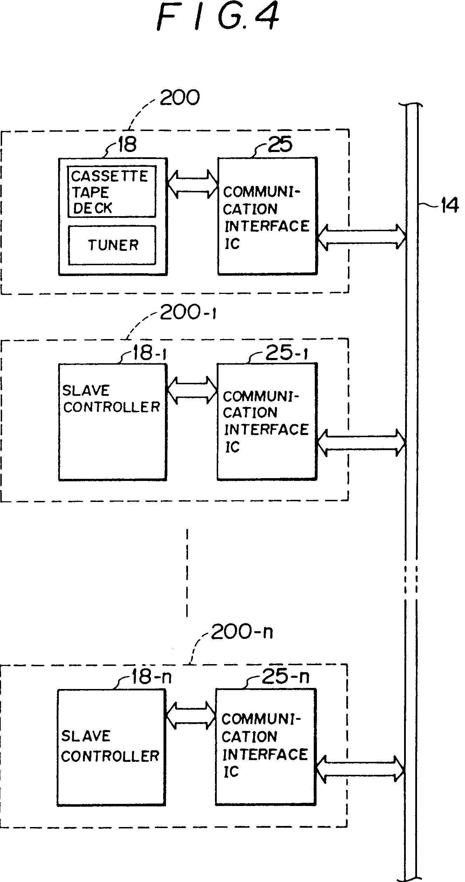

The above components of the audiovisual system have respective controllers for controlling their own operation. These controllers are connected to each other through a communication bus 14, thereby making up a communication bus control network. The control network is shown in FIG. 4, and will be described in detail later on.

Reproduced signals $S_1$ from the audio reproducing components are selectively applied through a DSP preamplifier 15, which doubles as a selector and has a DSP, as a reproduced signal $S_{2F}$, to a front amplifier 16F and as a reproduced signal $S_{2R}$, a rear amplifier 16R. The reproduced signal $S_{2F}$, applied to the front amplifier 16F is amplified thereby, and supplied as reproduced signals $S_{3F}$, to front Loudspeakers 17F from which the reproduced sounds are radiated. The reproduced signal $S_{2R}$, applied to the rear amplifier 16R is amplified thereby, and supplied as reproduced signals $S_{3R}$ to rear loudspeakers 17R from which the reproduced sounds are radiated. The front and rear amplifiers 16F, 16R contain respective digital signal processing circuits which are controlled by respective controllers in the amplifiers 16F, 16R, the controllers being connected to the communication bus 14. The front and rear amplifiers 16F, 16R have respective memories 16FM, 16RM for storing various data.

## CONTROL NETWORK OF AUDIOVISUAL SYSTEM

FIG. 4 shows the control network in detail. For the purpose of description, the audiovisual system components connected to the communication bus 14 as shown in FIG. 3 will hereinafter be referred to as "units." As shown in FIG. 4, these units are connected to the communication bus 14 parallel to each other. Either one of these units is selected as a "master" unit, indicated by 200, for controlling the communication network, while the other units serve as "slave" units, indicated by $200_{-1} \sim 200_{-n}$.

The master unit 200 has a master controller 18 connected through a communication interface IC 25 to the communication bus 14. The master controller 18 doubles as controllers for controlling the cassette tape deck 6 and the tuner 7. The slave units $200_{-1} \sim 200_{-n}$ have respective slave controllers $18_{-1} \sim 18_{-n}$ which are also connected to the communication bus 14 through respective communication interface ICs $25_{-1} \sim 25_{-n}$.

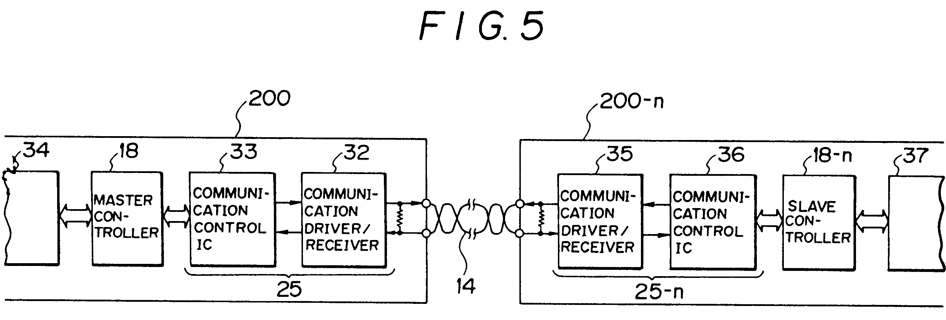

FIG. 5 shows a specific arrangement in which the master unit 200 and the slave unit $200_{-n}$ are connected to each other. The master unit 200 and the slave unit $200_{-n}$ are connected to each other by the communication bus 14. The communication bus 14 comprises a twisted pair of conductors or wires. Communication data DT transferred through the communication bus 14 is transmitted and received by the communication interface ICs 25, $25_{-n}$ of the master unit 200 and the slave unit $200_{-n}$, respectively. The communication interface IC 25 is divided into a communication driver/receiver IC 32 and a communication control IC 33. Likewise, the communication interface IC $25_{-n}$ is divided into a communication driver/receiver IC 35 and a communication control IC 36. Heretofore, the communication driver/receiver and the communication control IC have been integrally combined in one IC. The communication control IC 33 is composed of a CMOS transistor, while the communication driver/receiver IC 32 is composed of a bipolar transistor of high current-driven capability. The communication driver/receiver IC 35 and the communication control IC 36 are of the same structures as the communication driver/receiver IC 32 and the communication control IC 33.

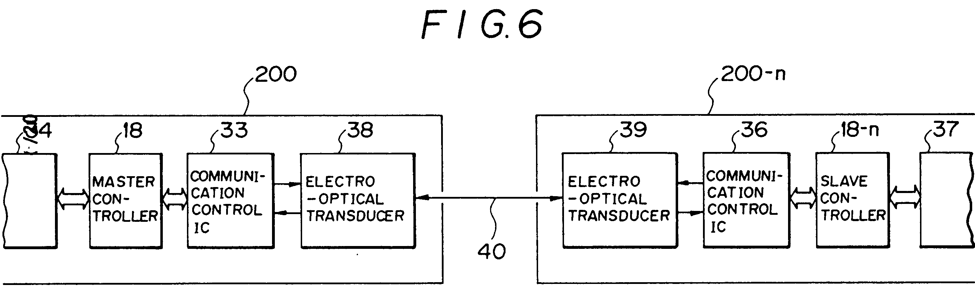

The communication interface IC 25, for example, which is divided into the communication control IC 33 and the communication driver/receiver IC 32, is capable of coping with different transmission mediums for the communication bus 14. In FIG. 5, the communication bus 14 is composed of a twisted pair of conductors or wires for differential transmission. If the communication bus 14 comprises an optical communication cable 40 as shown in FIG. 6, then the communication driver/receiver IC 32 shown in FIG. 5 may be replaced with an electro-optical transducer 38 with the communication control IC 33 remaining unchanged. Another advantage is that since the master unit 200 fails due primarily to disturbance noise entering from the communication bus 14, only the communication driver/receiver IC 32 will malfunction when an excessive signal is applied thereto from the communication bus 14, and replacing the malfunctioning communication driver/receiver IC 32 with a new one will restore the master unit 200. Consequently, the maintenance of the master unit 200 and also the slave unit $200_{-n}$ is relatively easy to carry out. The easy maintenance is particularly advantageous with audiovisual systems on automobiles because the master and slave units are exposed to and tend to be damaged by noise induced by the automobile engines.

Furthermore, the fabrication of bipolar transistors and CMOS transistors according to different processes is easier and less expensive than the fabrication of Bi-CMOS ICs.

While only the communication interface IC 25 has been described above, each of the communication interfaces $25_{-1} \sim 25_{-n}$ of the other slave units $200_{-1} \sim 200_{-n}$ is also divided into a communication control IC and a communication driver/receiver IC.

## TRANSMISSION FORMAT OF COMMUNICATION DATA DT

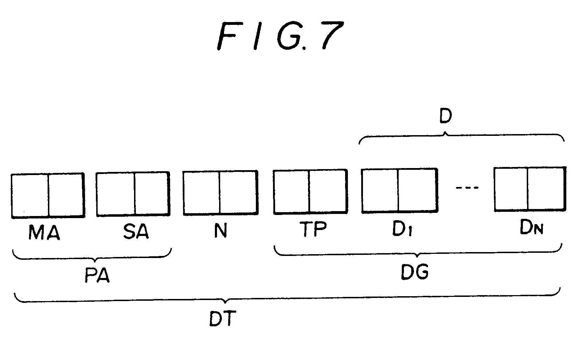

FIG. 7 shows a transfer format of the communication data DT. As shown in FIG. 7, the communication data DT comprises, from its leading end, master address data MA indicating the address of the master unit 200, slave address data SA indicating the addresses of the slave units $200_{-1} \sim 200_{-n}$, message length data N indicating the message length of data D, classification data TP indicating the type of the data D, and the data D ($D_1 \sim D_n$) itself which represents the contents to be transferred. A data group DG is composed of data to be transmitted actually.

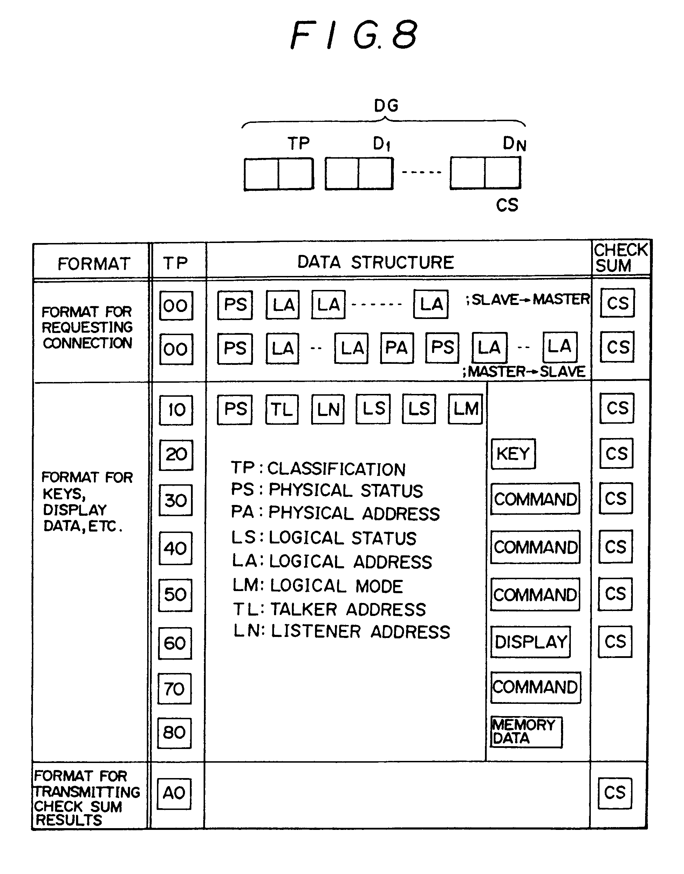

The arrangement of the data D varies depending on the contents of the communication data DT, i.e., the classification data TP. There are roughly three formats for the data D. As shown in FIG. 8, the first format is a format for requesting a connection, the second format is a format for keys and display data, and the third format is a format for transmitting the result of a check sum CS. In the format for keys and display data as shown in FIG. 8, data ranging from physical status data PS to logical mode data LM are all identical, and omitted from illustration.

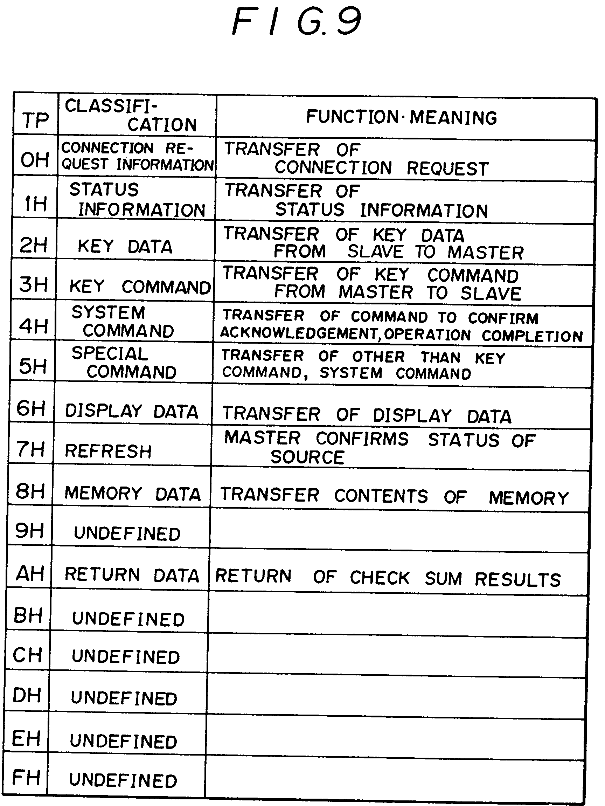

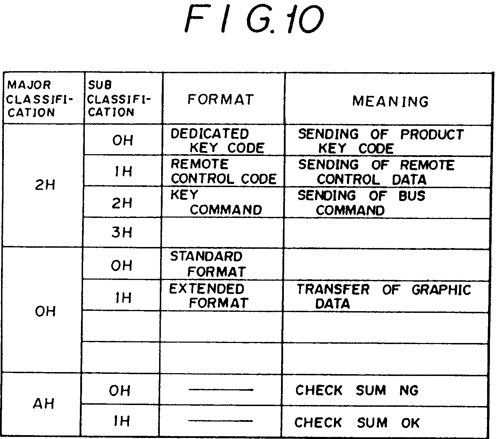

The classification data TP is positioned at the leading end of the communication data DT, and serves as a data area indicating the type of the data D following the classification data TP. The classification data TP is composed of major classification data and subclassification data. As shown in FIG. 9, the major classification data represents the type of the data D. If the entire classification data TP is of 8 bits, then the major classification data is allotted four high-order bits. As shown in FIG. 10, the subclassification data is mainly used to identify the format of the data D, and is allotted four low-order bits. For example, if the classification data TP is TP = "21H", then the four high-order bits are "2H" and mean that key data are to be transferred from the slave unit to the master unit, and the four low-order bits are "1H" and mean that the key data to be transferred is remote control data.

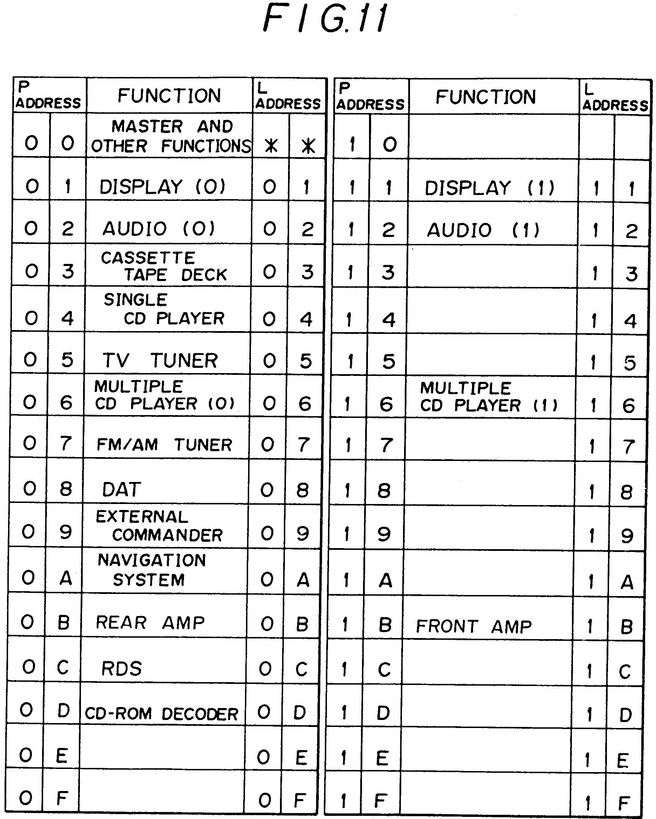

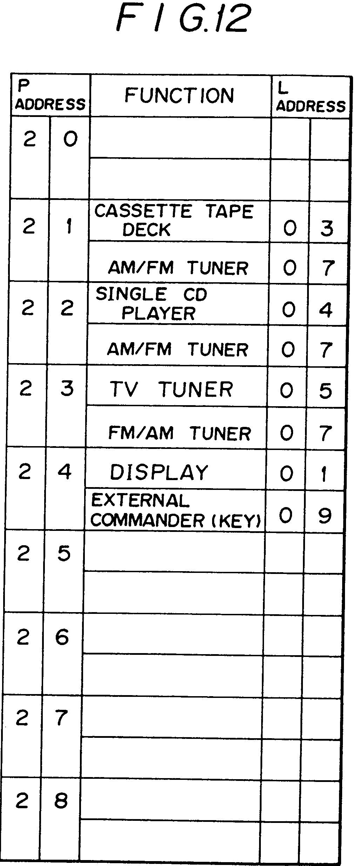

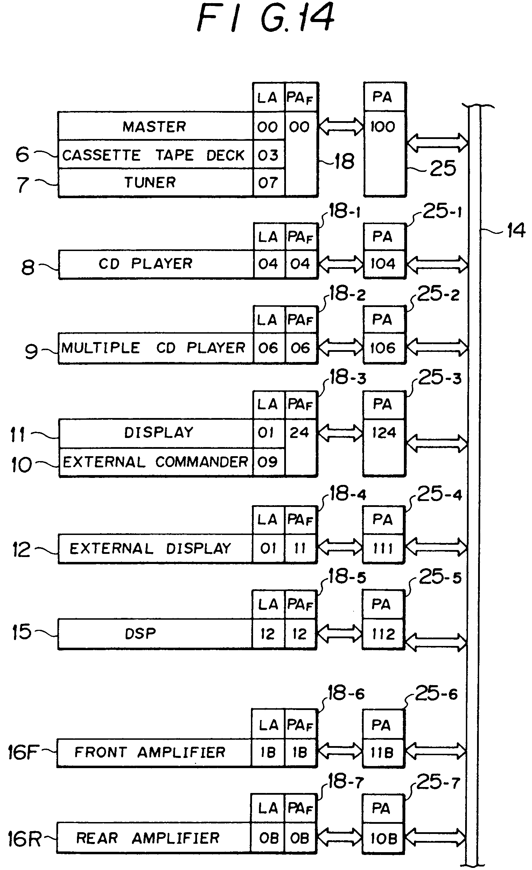

As illustrated in FIGS. 11 and 12, the physical address data PA represents communication addresses for specifying the communication interface ICs $25_{-1} \sim 25_{-n}$ of the master unit 200 and the slave units $200_{-1} \sim 200_{-n}$ on the communication bus 14, the addresses indicating the master unit 200 and the slave units $200_{-1} \sim 200_{-n}$. The physical address data PA for specifying the master unit 200 is fixed at all times. Basically, one unit is allotted one physical address data PA. FIG. 14 shows an example in which the units shown in FIG. 3 are allotted physical address data PA. In FIG. 14, the physical address data PA are established for the master and slave controllers $18 \sim 18_{-7}$. This is to take into account the fact that two functional elements, such as the cassette tape deck 6 and the tuner 7, are connected to one master controller 18, as with the master unit 200. If one controller is combined with one function, then the physical address data PA and the logical address data LA indicate the same address, as with the slave controllers $18_{-1}$, $18_{-2}$, $18_{-4}$, $18_{-5}$, $18_{-6}$, $18_{-7}$.

The physical status data PS represents status information about the master unit 200 and the slave units $200_{-1} \sim 200_{-n}$, and is data indicative of the number of function addresses (i.e., the logical address data LA, described below) that the units have.

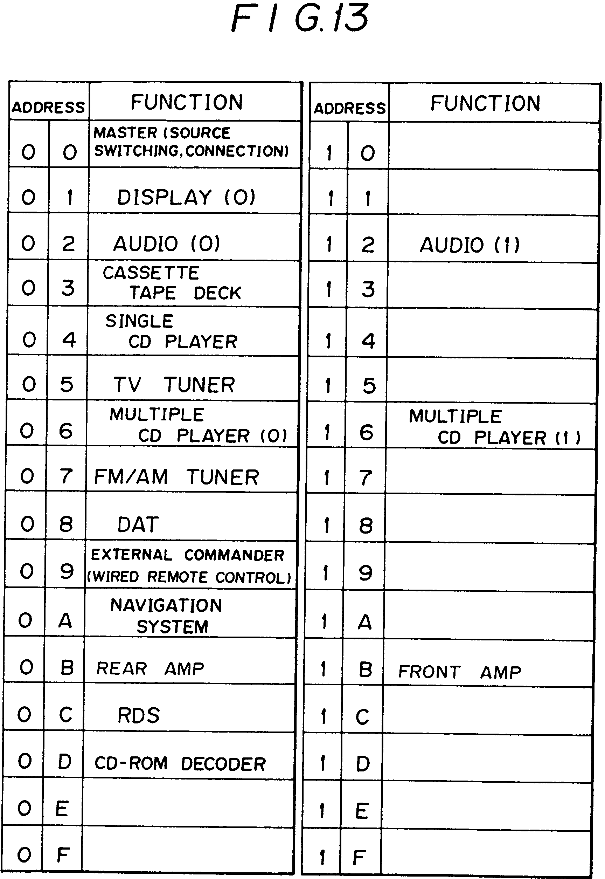

As shown in FIG. 13, the logical address data LA is data indicative of each of the functions (e.g., the tuner and the cassette tape deck) possessed by the master unit 200 and the slave units $200_1 \sim 200_n$. The logical address data LA is assigned to each function. The number of logical address data LA is not fixed because there are as many logical address data LA (e.g., $LA_1$, $LA_2$, ...) as there are functions possessed by the controller that is determined by the physical address data PA. FIG. 14 also shows the logical address data LA assigned to the units shown in FIG. 3.

The talker address data TL indicates the address of a transmitting side (talker) which transmits the communication data DT. The listener address data LN indicates the address of a receiving side (listener) which receives the communication data DT. The logical status data LS represents the status of the function corresponding to each logical address LA. The logical mode data LM represents the operation status (mode) of the function corresponding to each logical address LA. The check sum data CS is added data for detecting an error to improve the reliability of the data D.

## COMMUNICATING OPERATION

Operation of the audiovisual system described above for sending communication data from the DSP preamplifier 15, as a master unit, to the front and rear amplifiers 16F, 16R, as slave units, will be described below.

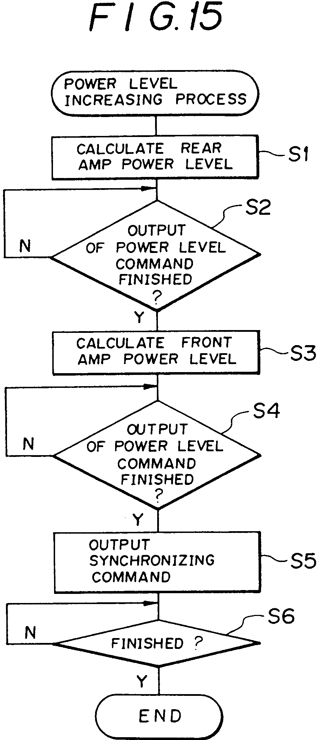

FIG. 15 shows a control sequence of the DSP preamplifier 15 for increasing the power level of the rear and front amplifiers 16F, 16R.

The DSP preamplifier 15 calculates data for varying the power level of the rear amplifier 16R in a step S1. Then, the DSP preamplifier 15 outputs a power level command corresponding to the calculated power level varying data to the communication bus 14, and determines whether the outputting of the power level command is finished, i.e., the reception by the rear amplifier 16R of the power level command is finished, or not in a step S2. The DSP preamplifier 15 is kept In a standby mode until the power level command is received-by the rear amplifier 16R. If the rear amplifier 16R requests the transmission of the power level command, then the DSP amplifier 15 transmits the power level command again to the rear amplifier 16R. If the rear amplifier 16R has received the power level command, then the DSP preamplifier 15 calculates data for varying the power level of the front amplifier 16F in a step S3. Then, the DSP preamplifier 15 outputs a power level command corresponding to the calculated power level varying data to the communication bus 14, and determines whether the outputting of the power level command is finished, i.e., the reception by the front amplifier 16F of the power level command is finished, or not in a step S4. The DSP preamplifier 15 is kept in a standby mode until the power level command is received by the front amplifier 16F. If the front amplifier 16F requests the transmission of the power level command, then the DSP amplifier 15 transmits the power level command again to the front amplifier 16F.

If the front amplifier 16F has received the power level command, then the DSP preamplifier 15 outputs a synchronizing command as operation start data to the communication bus 14 in a step S5. The front and rear amplifiers 16F, 16R simultaneously receive the synchronizing command, whereupon the power levels of the front and rear amplifiers 16F, 16R are simultaneously increased.

The DSP preamplifier 15 determines whether the outputting of the synchronizing command is finished, i.e., the reception by the front and rear amplifier 16F, 16R of the synchronizing command is finished, or not in a step S6. If the front and rear amplifiers 16F, 16R have received the synchronizing command, then control comes to an end.

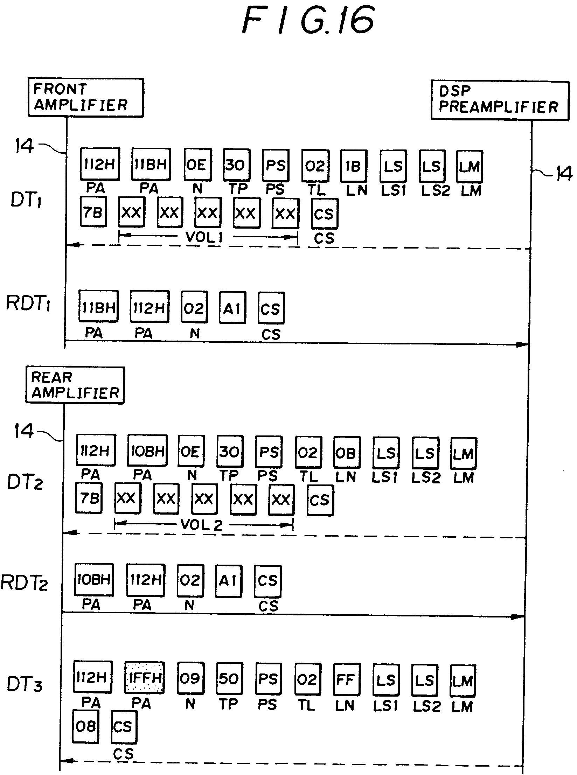

FIG. 16 shows a detailed sequence of data communication at the time the DSP preamplifier 15 simultaneously increase the power levels of the front and rear amplifiers 16F, 16R.

The DSP preamplifier 15 transmits communication data $DT_1$ through the communication bus 14 to the front amplifier 16F to give the front amplifier 16F power level varying data therefor, e.g., power level increasing data indicative of a decibel value corresponding to the amount by which the power level is to increase. The communication data $DT_1$ is composed of physical address data PA = "112H" of the master unit (= DSP preamplifier 15, "H" means the hexadecimal notation) as a master address code, physical address data PA = "11BH" of the slave unit (= front amplifier 16F), as a slave address code, to which the communication data $DT_1$ is to be transmitted, message length data N = "OEH" (= 14) indicating that the number of data items to be transmitted is 14, talker address data TL, listener address data LN, logical status data LS1, logical status data LS2, logical mode data LM, a power level increasing command "7B" as a power level command, power level increasing data VOL1, and check sum data CS.

Having received the communication data $DT_1$, the slave controller $18_{-6}$ of the front amplifier 16F functions as an operation determining means to determine whether the communication data $DT_1$ is to be immediately executed or not. In this case, the slave controller $18_{-6}$ determines that the communication data $DT_1$ is not to be immediately executed. The front amplifier 16F stores the power level increasing data VOL 1 in the memory 16FM.

When the front amplifier 16F has received the communication data $DT_1$, the front amplifier 16F transmits return data $RDT_1$, indicating that the check sum data is agreed with, to the DSP preamplifier 15, thus indicating the completion of the reception by the front amplifier 16F of the communication data $DT_1$.

The DSP preamplifier 15 now determines that the transfer of the power level increasing data VOL1 to the front amplifier 16F is finished, and then issues and transmits communication data DT, through the communication bus 14 to the rear amplifier 16R to give the rear amplifier 16R power level varying data therefor, e.g., power level increasing data indicative of a decibel value corresponding to the amount by which the power level is to increase. The communication data DT, is composed of physical address data PA = "112H" of the master unit, physical address data PA = "10BH" of the slave unit (= rear amplifier 16R), message length data N = "OEH" (= 14) indicating that the number of data items to be transmitted is 14, talker address data TL, listener address data LN, logical status data LS1, logical status data LS2, logical mode data LM, a power level increasing command "7B" as a power level command, power level increasing data VOL2, and check sum data CS.

Having received the communication data $DT_2$, the slave controller $18_{-7}$ of the rear amplifier 16R functions as an operation determining means to determine whether the communication data $DT_2$ is to be immediately executed or not. In this case, the slave controller $18_{-7}$ determines that the communication data $DT_2$ is not to be immediately executed. The rear amplifier 16R stores the power level increasing data VOL 2 in the memory 16RM.

When the rear amplifier 16R has received the communication data $DT_2$, the rear amplifier 16R transmits return data $RDT_2$, indicating that the check sum data is agreed with, to the DSP preamplifier 15, thus indicating the completion of the reception by the rear amplifier 16R of the communication data $DT_2$.

The DSP preamplifier 15 now determines that the transfer of the power level increasing data VOL2 to the rear amplifier 16R is finished. Thereafter, the master controller 18 of the DSP preamplifier 15 functions as an operation indicating means to issue and transmit communication data $DT_3$ (synchronizing command) through the communication bus 14 simultaneously to the front and rear amplifiers 16F, 16R for causing them to increase the power levels simultaneously. In response to the simultaneous reception of the communication data $DT_3$, the front and rear amplifiers 16F, 16R start increasing their power levels simultaneously.

The communication data DT, will be described in detail below. The communication data DT, has a format for sending data to a plurality of slave units selected by the master unit. The communication data $DT_3$ will hereinafter be also referred to as "multiaddress communication data". If the DSP amplifier 15, as the master unit, selects the front and rear amplifiers 16F, 16R, for example, since the physical addresses PA of the front and rear amplifiers 16F, 16R are "11BH" and "10BH", respectively, and the four high-order bits of all the twelve bits thereof are "1H" for both the front and rear amplifiers 16F, 16R, the multiaddress communication data as the synchronizing command contains physical address data PA = "1FFH" of the slave units to which the multiaddress communication data is to be transmitted. The four high-order bits of the physical addresses PA serve as a group common code that is common to the group of slave units.

The slave units connected to the communication bus determine whether the four high-order bits of the received multiaddress communication data are equal to each other with the eight low-order bits ("FFH") thereof as mask data. Those slave units which recognize that the four high-order bits of the received multiaddress communication data are equal to each other, i.e., the front and rear amplifiers 16F, 16R, are capable of receiving the multiaddress communication data simultaneously. Therefore, the slave units indicated by the equal four high-order bits can simultaneously share the multiaddress communication data.

The master unit transmits such multiaddress communication data containing a synchronizing command for causing selected slave units to start operating. In response to the reception of the synchronizing command, the selected slave units simultaneously start their operation based on the previously received operation data.

By thus establishing physical addresses PA of a plurality of slave units to be operated simultaneously, the master unit can operate these slave units simultaneously.

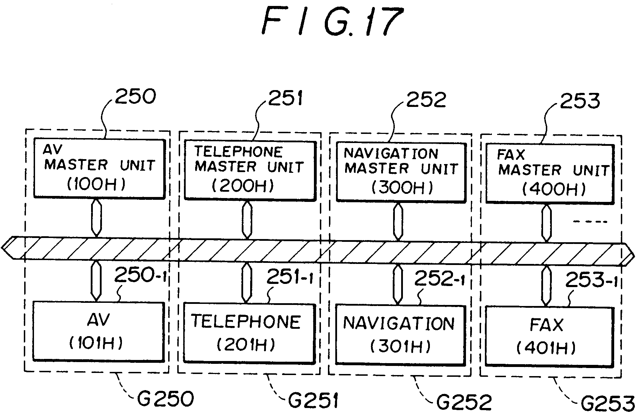

The data communication system has two master units in the above embodiment. However, the present invention is also applicable to a data communication system having one master unit, or a data communication system having a plurality of master units having different functions, as shown in FIG. 20. In FIG. 20, the data communication system has an audiovisual master unit 250, a telephone master unit 251, a navigation master unit 252, and a facsimile master unit 253 which are connected to a common communication bus, and also a plurality of slave units $250_{-1}$, $251_{-1}$, $252_{-1}$, $253_{-1}$. The slave units are classified into groups, which are allotted respective physical addresses such that multiaddress communication data can be transmitted simultaneously to all the slave units belonging to one group. For example, if the physical addresses PA are of 12 bits, then the four high-order bits of the physical addresses PA of an audiovisual group G250 controlled by the audiovisual master unit 250 are set to "1H", with the physical address PA of the slave unit $250_{-1}$ being set to "101H", for example. Similarly, the four high-order bits of the physical addresses PA of a telephone group G251 controlled by the telephone master unit 251 are set to "2H", the four high-order bits of the physical addresses PA of a navigation group G252 controlled by the navigation master unit 252 are set to "3H", and the four high-order bits of the physical addresses PA of a facsimile group G253 controlled by the faccimile master unit 253 are set to "4H". In this manner, multiaddress communication data can be transmitted simultaneously to the slave units belonging to one group, using "FFH" of the multiaddress communication data as mask data. The data communication system shown in FIG. 17 is advantageous in that the burden on each of the master units is less, and hence the processing speed thereof is higher, than if one master unit is to control all the slave units $250_{-1}$, $251_{-1}$, $252_{-1}$, $253_{-1}$. The data communication system shown in FIG. 17 also makes it easier to add master and slave units of a new function to the data communication system.

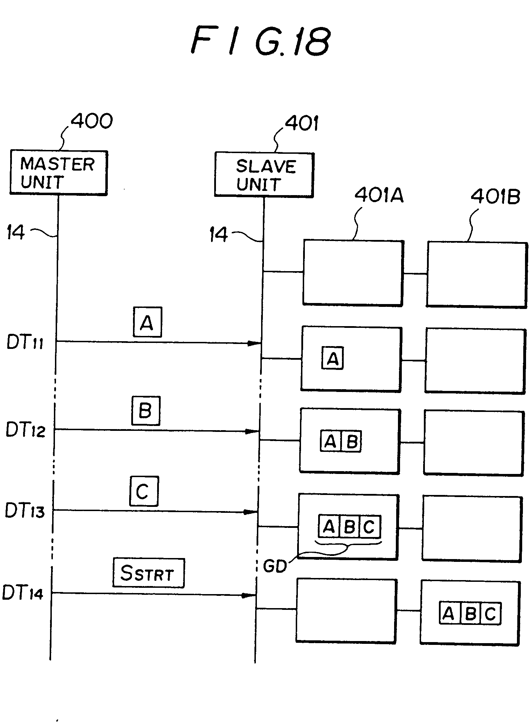

In the above embodiments, a plurality of slave units are simultaneously operated by the master unit. It is also possible to transmit operation data in advance to one slave unit to cause the slave unit to effect a preparatory action, and then transmit operation start data to the salve unit for enabling the slave unit to effect its operation based on the previously transmitted operation data. More specifically, as shown in FIG. 18, a master unit 400 divides a data group GD into segment data A, B, C each having no significance. Then, the master unit 400 transmits the segment data A by way of communication data $DT_{11}$ through a communication bus 14 to a buffer 401A of a slave unit 401, and also transmits the segment data B, C by way of communication data $DT_{12}$, $DT_{13}$ through the communication bus 14 to the buffer 401A according to a time-division multiplexing process. After having transmitted all the segment data, the master unit 400 transmits operation start data $S_{STRT}$, by way of communication data $DT_{14}$ through the communication bus 14 to the slave unit 401. Then, the slave unit 401 transfers the data group GD to a processor 401B, which executes an operation based on the transferred data group GD. Therefore, when the master unit is required to transmit a large amount of data to the slave unit, the master unit divides the data into segments or blocks and transmits the segment data to the slave unit. After completion of the transmission of all the segment data, the master unit sends operation start data to enable the slave unit to carry out an operation based on the previously transmitted data. Since the data communication system shown in FIG. 18 does not occupy the communication bus for a long period of time, the data communication system can be operated smoothly.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

**Claims**

1. A data communication system for use on a motor vehicle, comprising:
   a communication bus;
   at least one master unit connected to said communication bus; and
   a plurality of slave units connected to said communication bus;
   said master unit having operation start indicating means for transmitting, through said communication bus to said slave units, operation start data which includes slave address code data which identifies at least two of said slave units;

each of said slave units having memory means for storing operation data, indicative of an operation sequence, that has been transmitted in advance from said master unit, and operation starting means for starting to operate the slave unit based on the stored operation data when the slave address code data transmitted from said master unit corresponds to a slave address code which is allotted to the slave unit.

2. A data communication system according to claim 1, wherein said master unit is allotted a master address code which identifies the master unit itself, said master unit having means for transmitting, through said communication bus to said slave units, communication data which includes master address code data indicative of said master address code.

3. A data communication system according to claim 1, wherein each of said slave units is allotted a group common code which identifies a group of slave units to which communication data is to be transmitted simultaneously, said group common code corresponding to said slave address code data.

4. A data communication system for use on a motor vehicle, comprising:

a communication bus;

at least one master unit connected to said communication bus; and

a plurality of slave units connected to said communication bus;

said master unit having operation start indicating means for transmitting, through said communication bus to said slave units, operation start data which includes slave address code data which identifies either one of said slave units;

each of said slave units having memory means for storing operation data that has been transmitted in advance from said master unit, and operation starting means for starting to operate the slave unit based on the stored operation data when the slave address code data transmitted from said master unit corresponds to a slave address code which is allotted to the slave unit.

5. A data communication system according to claim 4, wherein said master unit comprises data transmitting means for dividing the operation data into a plurality of segment data and transmitting the segment data according to a time-division multiplexing mode; and

said memory means of each of said slave units comprises means for successively storing the segment data transmitted by said data transmitting means, each of said slave units having means for reproducing said operation data from the segment data stored in said memory means, said operation starting means comprising means for starting to operate the slave unit based on the reproduced operation data.

6. A method of controlling operation of a data communication system for use on a motor vehicle, the data communication system comprising a communication bus, at least one master unit connected to said communication bus, and a plurality of slave units connected to said communication bus, said method comprising the steps of:

transmitting, from said master unit through said communication bus to said slave units, operation start data which includes slave address code data which identifies at least two of said slave units;

storing, in each of said salve units, operation data, indicative of an operation sequence, that has been transmitted in advance from said master unit; and

starting to operate the slave unit based on the stored operation data when the slave address code data transmitted from said master unit corresponds to a slave address code which is allotted to the slave unit.

# F I G. 1

100

101
101'
MASTER UNIT
MASTER UNIT

104 — OPERATION START INDICATING UNIT
OPERATION START INDICATING UNIT — 104

103

$S_{STRT}$

SLAVE UNIT
105 — MEMORY
106 — OPERATION STARTING UNIT
102-1

SLAVE UNIT
MEMORY — 105
OPERATION STARTING UNIT — 106
102-2

SLAVE UNIT
MEMORY
OPERATION STARTING UNIT
102-n

. . .

# F I G. 2

# F I G. 3

# F I G. 4

FIG. 5

EP 0 511 795 A1

# F I G.6

200

34  18  33  38

| MASTER CON-TROLLER | COMMUNI-CATION CONTROL IC | ELECTRO -OPTICAL TRANSDUCER |

40

200-n

39  36  18-n  37

| ELECTRO -OPTICAL TRANSDUCER | COMMUNI-CATION CONTROL IC | SLAVE CON-TROLLER |

15

# F I G. 7

# F I G. 8

DG

TP    D₁        D_N

CS

| FORMAT | TP | DATA STRUCTURE | CHECK SUM |
|---|---|---|---|
| FORMAT FOR REQUESTING CONNECTION | 00 | PS  LA  LA  - - - - - -  LA    ;SLAVE→MASTER | CS |
|  | 00 | PS  LA  - -  LA  PA  PS  LA  - -  LA    ;MASTER→SLAVE | CS |
| FORMAT FOR KEYS, DISPLAY DATA, ETC. | 10 | PS  TL  LN  LS  LS  LM | CS |
|  | 20 | TP : CLASSIFICATION       KEY | CS |
|  | 30 | PS : PHYSICAL STATUS     COMMAND | CS |
|  | 40 | PA : PHYSICAL ADDRESS   COMMAND | CS |
|  | 50 | LS : LOGICAL STATUS     COMMAND | CS |
|  | 60 | LA : LOGICAL ADDRESS    DISPLAY | CS |
|  | 70 | LM: LOGICAL MODE        COMMAND |  |
|  | 80 | TL: TALKER ADDRESS      MEMORY DATA |  |
|  |  | LN: LISTENER ADDRESS |  |
| FORMAT FOR TRANSMITTING CHECK SUM RESULTS | AO |  | CS |

17

# F I G. 9

| TP | CLASSIFI-CATION | FUNCTION·MEANING |
|---|---|---|
| OH | CONNECTION RE-QUEST INFORMATION | TRANSFER OF CONNECTION REQUEST |
| 1H | STATUS INFORMATION | TRANSFER OF STATUS INFORMATION |
| 2H | KEY DATA | TRANSFER OF KEY DATA FROM SLAVE TO MASTER |
| 3H | KEY COMMAND | TRANSFER OF KEY COMMAND FROM MASTER TO SLAVE |
| 4H | SYSTEM COMMAND | TRANSFER OF COMMAND TO CONFIRM ACKNOWLEDGEMENT, OPERATION COMPLETION |
| 5H | SPECIAL COMMAND | TRANSFER OF OTHER THAN KEY COMMAND, SYSTEM COMMAND |
| 6H | DISPLAY DATA | TRANSFER OF DISPLAY DATA |
| 7H | REFRESH | MASTER CONFIRMS STATUS OF SOURCE |
| 8H | MEMORY DATA | TRANSFER CONTENTS OF MEMORY |
| 9H | UNDEFINED | |
| AH | RETURN DATA | RETURN OF CHECK SUM RESULTS |
| BH | UNDEFINED | |
| CH | UNDEFINED | |
| DH | UNDEFINED | |
| EH | UNDEFINED | |
| FH | UNDEFINED | |

18

# F I G. 10

| MAJOR CLASSIFI-CATION | SUB CLASSIFI-CATION | FORMAT | MEANING |
|---|---|---|---|
| 2H | OH | DEDICATED KEY CODE | SENDING OF PRODUCT KEY CODE |
| | 1H | REMOTE CONTROL CODE | SENDING OF REMOTE CONTROL DATA |
| | 2H | KEY COMMAND | SENDING OF BUS COMMAND |
| | 3H | | |
| OH | OH | STANDARD FORMAT | |
| | 1H | EXTENDED FORMAT | TRANSFER OF GRAPHIC DATA |
| | | | |
| | | | |
| AH | OH | ——————— | CHECK SUM NG |
| | 1H | ——————— | CHECK SUM OK |

# F I G.11

| P ADDRESS | | FUNCTION | L ADDRESS | | P ADDRESS | | FUNCTION | L ADDRESS | |
|---|---|---|---|---|---|---|---|---|---|
| O | O | MASTER AND OTHER FUNCTIONS | ✳ | ✳ | 1 | O | | | |
| O | 1 | DISPLAY (O) | O | 1 | 1 | 1 | DISPLAY (1) | 1 | 1 |
| O | 2 | AUDIO (O) | O | 2 | 1 | 2 | AUDIO (1) | 1 | 2 |
| O | 3 | CASSETTE TAPE DECK | O | 3 | 1 | 3 | | 1 | 3 |
| O | 4 | SINGLE CD PLAYER | O | 4 | 1 | 4 | | 1 | 4 |
| O | 5 | TV TUNER | O | 5 | 1 | 5 | | 1 | 5 |
| O | 6 | MULTIPLE CD PLAYER (O) | O | 6 | 1 | 6 | MULTIPLE CD PLAYER (1) | 1 | 6 |
| O | 7 | FM/AM TUNER | O | 7 | 1 | 7 | | 1 | 7 |
| O | 8 | DAT | O | 8 | 1 | 8 | | 1 | 8 |
| O | 9 | EXTERNAL COMMANDER | O | 9 | 1 | 9 | | 1 | 9 |
| O | A | NAVIGATION SYSTEM | O | A | 1 | A | | 1 | A |
| O | B | REAR AMP | O | B | 1 | B | FRONT AMP | 1 | B |
| O | C | RDS | O | C | 1 | C | | 1 | C |
| O | D | CD-ROM DECODER | O | D | 1 | D | | 1 | D |
| O | E | | O | E | 1 | E | | 1 | E |
| O | F | | O | F | 1 | F | | 1 | F |

# F I G.12

| P ADDRESS | | FUNCTION | L ADDRESS | |
|---|---|---|---|---|
| 2 | 0 | | | |
| | | | | |
| 2 | 1 | CASSETTE TAPE DECK | 0 | 3 |
| | | AM/FM TUNER | 0 | 7 |
| 2 | 2 | SINGLE CD PLAYER | 0 | 4 |
| | | AM/FM TUNER | 0 | 7 |
| 2 | 3 | TV TUNER | 0 | 5 |
| | | FM/AM TUNER | 0 | 7 |
| 2 | 4 | DISPLAY | 0 | 1 |
| | | EXTERNAL COMMANDER (KEY) | 0 | 9 |
| 2 | 5 | | | |
| | | | | |
| 2 | 6 | | | |
| | | | | |
| 2 | 7 | | | |
| | | | | |
| 2 | 8 | | | |
| | | | | |

# F I G. 13

| ADDRESS | | FUNCTION | ADDRESS | | FUNCTION |
|---|---|---|---|---|---|
| O | O | MASTER (SOURCE SWITCHING,CONNECTION) | 1 | O | |
| O | 1 | DISPLAY (O) | 1 | 1 | |
| O | 2 | AUDIO (O) | 1 | 2 | AUDIO (1) |
| O | 3 | CASSETTE TAPE DECK | 1 | 3 | |
| O | 4 | SINGLE CD PLAYER | 1 | 4 | |
| O | 5 | TV TUNER | 1 | 5 | |
| O | 6 | MULTIPLE CD PLAYER (O) | 1 | 6 | MULTIPLE CD PLAYER (1) |
| O | 7 | FM/AM TUNER | 1 | 7 | |
| O | 8 | DAT | 1 | 8 | |
| O | 9 | EXTERNAL COMMANDER (WIRED REMOTE CONTROL) | 1 | 9 | |
| O | A | NAVIGATION SYSTEM | 1 | A | |
| O | B | REAR AMP | 1 | B | FRONT AMP |
| O | C | RDS | 1 | C | |
| O | D | CD-ROM DECODER | 1 | D | |
| O | E | | 1 | E | |
| O | F | | 1 | F | |

# F I G.14

# F I G.15

POWER LEVEL INCREASING PROCESS

CALCULATE REAR AMP POWER LEVEL — S1

OUTPUT OF POWER LEVEL COMMAND FINISHED ? — S2
N / Y

CALCULATE FRONT AMP POWER LEVEL — S3

OUTPUT OF POWER LEVEL COMMAND FINISHED ? — S4
N / Y

OUTPUT SYNCHRONIZING COMMAND — S5

FINISHED ? — S6
N / Y

END

# F I G.16

FRONT AMPLIFIER

DSP PREAMPLIFIER

14

14

DT₁

| 112H | 11BH | OE | 30 | PS | 02 | 1B | LS | LS | LM |
|------|------|----|----|----|----|----|----|----|----|
| PA | PA | N | TP | PS | TL | LN | LS1 | LS2 | LM |

| 7B | XX | XX | XX | XX | XX | CS |
|----|----|----|----|----|----|----|

← VOL1 → CS

RDT₁

| 11BH | 112H | 02 | A1 | CS |
|------|------|----|----|----|
| PA | PA | N | | CS |

REAR AMPLIFIER

14

DT₂

| 112H | 10BH | OE | 30 | PS | 02 | OB | LS | LS | LM |
|------|------|----|----|----|----|----|----|----|----|
| PA | PA | N | TP | PS | TL | LN | LS1 | LS2 | LM |

| 7B | XX | XX | XX | XX | XX | CS |
|----|----|----|----|----|----|----|

← VOL2 →

RDT₂

| 10BH | 112H | 02 | A1 | CS |
|------|------|----|----|----|
| PA | PA | N | | CS |

DT₃

| 112H | 1FFH | 09 | 50 | PS | 02 | FF | LS | LS | LM |
|------|------|----|----|----|----|----|----|----|----|
| PA | PA | N | TP | PS | TL | LN | LS1 | LS2 | LM |

| 08 | CS |
|----|----|

CS

25

# F I G. 17

EP 0 511 795 A1

# F I G.18

# F I G. 19
## PRIOR ART
<u>300</u>

306

| MASTER UNIT (TUNER, CASSETTE TAPE DECK) | CD PLAYER | DSP PREAMP | REAR AMP (D/A)EVOL | FRONT AMP (D/A)EVOL |
|---|---|---|---|---|
| 301 | 302 | 303 | 304 | 305 |

RSP

FSP

EP 0 511 795 A1

# F I G. 20
# PRIOR ART

POWER LEVEL
INCREASING PROCESS

CALCULATE REAR
AMP POWER LEVEL — S10

OUTPUT
OF POWER LEVEL
COMMAND
FINISHED
? — S11

N

Y

CALCULATE FRONT
AMP POWER LEVEL — S12

OUTPUT
OF POWER LEVEL
COMMAND
FINISHED
? — S13

N

Y

END

EP 0 511 795 A1

**European Patent Office**

**EUROPEAN SEARCH REPORT**

Application Number

EP 92 30 3730

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | EP-A-0 468 553 (PHILIPS)<br>* page 2, column 1, line 27 - page 3, column 3, line 18; figure 1 *<br>--- | 1,3,4,6 | B60R16/02<br>G06F13/10<br>G06F9/44 |
| X | EP-A-0 216 533 (TEKTRONIX)<br>* page 2, column 2, line 34 - page 3, column 3, line 45; figure 1 *<br>--- | 1,4,6 | |
| A | GB-A-1 004 170 (MOTOROLA)<br>* claims 1,2; figure 1 *<br>--- | 1,4-6 | |
| A | GB-A-2 195 029 (MARS)<br>* claim 1; figure 1B * | 1,4,6 | |

TECHNICAL FIELDS SEARCHED (Int. Cl.5 )

B60R
G06F

The present search report has been drawn up for all claims

| Place of search | Date of completion of the search | Examiner |
|---|---|---|
| THE HAGUE | 18 AUGUST 1992 | GILL S.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document